# FASCICULE DE BREVET EUROPEEN

(11) **EP 3 390 254 B1**
(45) Date de publication et mention de la délivrance du brevet: **09.10.2019**
(21) Numéro de dépôt: 16825832.5
(22) Date de dépôt: 13.12.2016
(51) Int. Cl.: B65H 27/00, F16C 13/00, B29C 45/16

(54) **ROULEAU DE RENVOI POUR LE DÉVIDAGE D'UNE BOBINE D'UN PRODUIT PRÉSENTE EN BANDE**
UMLENKROLLE ZUM ABWICKELN EINER SPULE EINES BANDFÖRMIGEN PRODUKTS
RETURN ROLLER FOR UNWINDING A SPOOL OF A PRODUCT IN THE FORM OF A BAND

(30) Priorité: 18.12.2015 FR 1562730
(43) Date de publication de la demande: 24.10.2018
(73) Titulaire: Spoolex, 42230 Roche La Moliere (FR)
(72) Inventeur: LASSALLE, Luc, 42100 Saint-Etienne (FR); PAULET, Guillaume, 43240 Saint Just Malmont (FR)
(74) Mandataire: Cabinet Laurent & Charras
(86) Numéro de dépôt international: PCT/FR2016/053348
(87) Numéro de publication internationale: WO 2017/103414

(56) Documents cités:
- GB-A- 2 073 850
- JP-A- 2002 268 459
- US-A- 5 324 248

## Description

### DOMAINE TECHNIQUE

La présente invention concerne un rouleau de renvoi, également appelé rouleau de « transitique », utilisé dans un procédé de dévidage d'une bobine d'un produit présenté en bande, telle qu'une bande de textile ou une bande d'un matériau thermoformable par exemple.

Un rouleau de renvoi est utilisé dans un procédé de dévidage d'une bobine, pour convoyer et mettre en tension la bande de produit lors de son dévidage et défilement.

### ETAT ANTERIEUR DE LA TECHNIQUE

Il est connu de l'état de la technique un rouleau de renvoi pour le dévidage d'une bobine d'un produit présenté en bande. Ledit rouleau est généralement réalisé en acier. Par exemple, un rouleau de renvoi de l'état antérieur est utilisé pour le défilement de bandes dans le domaine de l'emballage et est divulgué dans GB 2 073 850 A selon le préambule de la revendication 1.

Dans le domaine technique du dévidage d'une bobine d'un produit présenté en bande, et dans un souci d'augmentation de la productivité, les bobines à dévider présentent des largeurs de plus en plus grandes et sont destinées à être dévidées avec des vitesses de défilement de plus en plus importantes.

L'augmentation de la vitesse de défilement du produit présenté en bande, et l'augmentation de sa largeur entrainent des contraintes mécaniques de tension dans ledit produit. En effet, ces contraintes sont générées par tous les éléments mécaniques en frottement avec le produit en défilement mis en oeuvre dans le procédé de dévidage, et principalement les rouleaux de renvoi.

Les rouleaux de renvoi, adaptés à la largeur du produit dévidé, présentent des longueurs et donc des masses de plus en plus importantes, et par conséquent une inertie importante. Ainsi, lors de la régulation de la vitesse de défilement du produit, à savoir une accélération ou une décélération, les rouleaux de renvoi ayant une forte inertie, génèrent un ralentissement ou une accélération du produit en défilement, inverse à l'accélération ou à la décélération demandée lors de la régulation. C'est ce que l'on nomme généralement le phénomène de retard lié à l'inertie des rouleaux de renvoi. Plus la vitesse de défilement et la largeur du produit sont importantes, plus le phénomène de retard est accentué, ce qui implique des tensions et des déformations du produit.

De ce qui précède, la productivité est limitée car la vitesse de défilement et la largeur du produit sont bridées.

### EXPOSE DE L'INVENTION

L'un des buts de l'invention est de fournir un rouleau de renvoi pouvant être utilisé dans un procédé de dévidage d'une bobine d'un produit présenté en bande, notamment de grande largeur, pour convoyer et mettre en tension ladite bande, tout en permettant d'augmenter la productivité dudit procédé sans générer de tension ou de déformation dans le produit.

A cet effet, et conformément à l'invention, il a été mis au point un rouleau de renvoi tel que définit par la revendication 1.

De cette manière, la masse totale et l'inertie d'un rouleau comprenant un corps en matériau composite sont bien inférieures à celles des rouleaux en acier de l'état de la technique, de sorte que le phénomène de retard lié est très nettement diminué. Les tensions et déformations du produit sont donc également diminuées, ce qui permet au rouleau de pouvoir supporter des bandes plus larges et avec des vitesses de défilement plus rapides que les rouleaux de l'état de la technique. La productivité d'un procédé de dévidage mettant en oeuvre un tel rouleau est augmentée.

L'utilisation d'un matériau composite permet de conserver les caractéristiques mécaniques du rouleau de renvoi nécessaires au bon fonctionnement du procédé de dévidage, à savoir principalement le module d'Young pour le contrôle de la flèche du rouleau. Il est en effet essentiel que le rouleau résiste et supporte la tension et le poids du produit sans fléchir, car lorsque le rouleau est entrainé en rotation à de très grandes vitesses, si le rouleau présente une flèche, des vibrations importantes sont générées pouvant détériorer les moyens de roulements assujettis aux embouts du rouleau.

Selon une forme de réalisation particulière, chaque embout se présente sous la forme d'un manchon ou d'un insert comprenant une structure interne alvéolaire de sorte que l'épaisseur des manchons ou inserts peut être relativement faible de manière à diminuer davantage l'inertie du rouleau. La structure alvéolaire permet également d'améliorer la tenue des embouts avec les moyens de roulements.

Les embouts peuvent être fixés de toute manière appropriée aux extrémités du corps cylindrique sans sortir du cadre de l'invention. Ils sont par exemple collés, engagés en force ou bien maintenus par des vis.

Chaque insert ou manchon à structure interne alvéolaire, se compose d'une portée cylindrique externe positionnée de manière concentrique autour d'une portée cylindrique interne, en étant reliée à cette dernière par l'intermédiaire d'une pluralité de nervures radiales longitudinales, faisant office d'entretoises, régulièrement réparties sur les circonférences desdites portées interne et externe.

De préférence, chaque insert ou manchon comprend un diamètre externe ajusté au diamètre interne du corps cylindrique et est monté intérieurement audit corps.

Selon une forme de réalisation particulière, le corps cylindrique est réalisé en fibres de verre, en fibres de carbone, en fibres d'aramide, en fibres polyéthylène ou en fibres végétales.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :

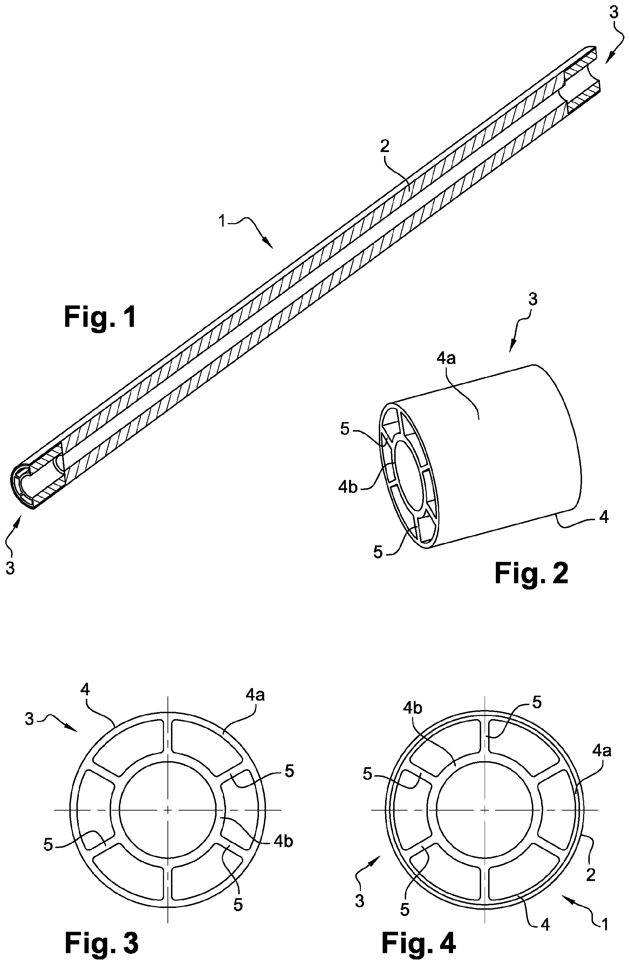

- la figure 1 représente le rouleau selon l'invention illustré en perspective et en coupe longitudinale ;
- la figure 2 est une représentation schématique en perspective d'un manchon ou insert à structure interne alvéolaire mis en oeuvre dans la présente invention ;
- la figure 3 est une représentation schématique du manchon ou insert de la figure 3, vu de côté ;
- la figure 4 est une représentation schématique du rouleau de la figure 1, vu de côté.

### EXPOSE DETAILLE DE L'INVENTION

L'invention concerne un rouleau de renvoi (1) destiné à être mis en oeuvre dans un procédé de dévidage d'une bobine (non représentée) d'un produit présenté en bande. L'opération de dévidage est par exemple effectuée afin de réaliser plusieurs bobines de bandes de moindres largeurs, à partir d'une bobine d'un produit en bande de grande largeur.

Le rouleau (1) selon l'invention permet de supporter, de convoyer et de mettre en tension des bandes de grandes largeurs, défilant à de très grandes vitesses, telle que par exemple à 800 m par minute.

Le rouleau (1) comprend une longueur adaptée à la largeur du produit à dévider, par exemple 1560 mm. Il comprend un corps cylindrique creux (2) comprenant par exemple un diamètre de 80 mm, réalisé en matériau composite, tel qu'en fibres de verre, en fibres de carbone, en fibres d'aramide plus connues sous la Marque déposée Kevlar®, en fibres polyéthylène ou en fibres végétales.

A chacune de ses extrémités, le corps cylindrique creux (2) comprend un embout (3) sous la forme d'un insert ou d'un manchon (4) comprenant une structure interne alvéolaire, monté intérieurement audit corps cylindrique (2). Les manchons (4) sont connus de l'état de la technique sous la Marque Alvéotube®. Les manchons (4) sont destinés à être assujettis à des moyens de roulements (non représentés) pour que le rouleau de renvoi (1), selon l'invention, soit monté libre en rotation dans le procédé de dévidage.

Les manchons (4) présentent une faible longueur par rapport au corps cylindrique (2), par exemple entre 8 et 10 cm. Chaque manchon (4) à structure interne alvéolaire, se compose d'une portée cylindrique externe (4a) présentant un diamètre ajusté au diamètre interne du corps cylindrique (2). La portée externe (4a) est positionnée de manière concentrique autour d'une portée cylindrique interne (4b), en étant reliée à cette dernière par l'intermédiaire d'une pluralité de nervures radiales longitudinales (5), faisant office d'entretoises, régulièrement réparties sur les circonférences desdites portées interne (4b) et externe (4a).

La surface externe de la portée cylindrique externe (4a) présente avantageusement des agencements permettant de faciliter son montage à l'intérieur du corps cylindrique creux (2), tels que par exemple un état de surface rugueux ou des nervures pour faciliter son collage, ou bien un pas de vis pour son montage par vissage dans ledit corps creux (2).

Les manchons alvéolaires (4) sont rendus solidaires des extrémités du corps cylindrique (2) par toute technique appropriée, telle que par engagement en force, collage, etc.

De ce qui précède, le rouleau (1) selon l'invention présente une inertie relativement faible par rapport aux rouleaux en acier de l'état de la technique, tout en conservant de bonnes propriétés mécaniques, notamment en termes de module d'Young pour résister sans fléchir au poids du produit de grande largeur.

La faible inertie du rouleau (1) selon l'invention permet de pouvoir augmenter la vitesse de défilement du produit dans le procédé de dévidage, afin d'en augmenter sa productivité. Le rouleau (1) présente une faible inertie de sorte que le phénomène de retard est diminué. Il en est de même pour les tensions et déformations générées dans le produit.

## Revendications

1. Rouleau de renvoi (1) pour le dévidage d'une bobine d'un produit présenté en bande, le rouleau de renvoi comprend un corps cylindrique creux (2) en matériau composite comprenant à chacune de ses extrémités un embout (3) destiné à être assujetti avec des moyens de roulement pour l'entrainement en rotation dudit rouleau (1),
**caractérisé en ce que** l'embout se présente sous la forme d'un manchon ou d'un insert comprenant une structure interne alvéolaire.

2. Rouleau de renvoi (1) selon la revendication 1, ***caractérisé* en ce que** les embouts (3) sont réalisés en acier.

3. Rouleau de renvoi (1) selon la revendication 1, ***caractérisé* en ce que** les embouts (3) sont réalisés en aluminium.

4. Rouleau (1) selon la revendication 1, ***caractérisé* en ce que** chaque insert ou manchon (4) à structure interne alvéolaire, se compose d'une portée cylindrique externe (4a) positionnée de manière concentrique autour d'une portée cylindrique interne (4b), en étant reliée à ladite portée cylindrique interne (4b) par l'intermédiaire d'une pluralité de nervures radiales longitudinales (5), faisant office d'entretoises, régulièrement réparties sur les circonférences desdites portées interne (4b) et externe (4a).

5. Rouleau (1) selon l'une quelconque des revendications 1 à 4, ***caractérisé* en ce que** chaque insert ou manchon (4) comprend un diamètre externe ajusté au diamètre interne du corps cylindrique (2) et est monté intérieurement audit corps cylindrique (2).

6. Rouleau (1) selon l'une quelconque des revendications 1 à 5, ***caractérisé* en ce que** le corps cylindrique (1) est réalisé en fibres de verre, en fibres de carbone, en fibres d'aramide, en fibres polyéthylène ou en fibres végétales.

## Patentansprüche

1. Umlenkrolle (1) zum Abwickeln einer Spule eines in Form eines Bandes vorliegenden Produktes, wobei die Umlenkrolle einen zylindrischen Hohlkörper (2) aus Verbundmaterial umfasst, der an jedem seiner Enden ein Endstück (3) aufweist, das dazu bestimmt ist, zum Drehantrieb der Rolle (1) an Rollvorrichtungen gebunden zu werden,
**dadurch gekennzeichnet, dass** das Endstück in Form einer Hülse oder eines Einsatzes mit einer inneren Zellstruktur vorliegt.

2. Umlenkrolle (1) nach Anspruch 1, **dadurch gekennzeichnet, dass** die Endstücke (3) aus Stahl gefertigt sind.

3. Umlenkrolle (1) nach Anspruch 1, **dadurch gekennzeichnet, dass** die Endstücke (3) aus Aluminium gefertigt sind.

4. Rolle (1) nach Anspruch 1, **dadurch gekennzeichnet, dass** jeder Einsatz oder jede Hülse (4) mit einer inneren Zellstruktur aus einer zylindrischen Außenfläche (4a) besteht, die konzentrisch um eine zylindrische Innenfläche (4b) positioniert ist und mit der zylindrischen Innenfläche (4b) über eine Vielzahl von radialen Längsrippen (5) verbunden ist, die als Abstandshalter wirken und gleichmäßig über die Umfänge der Innen- (4b) und Außenfläche (4a) verteilt sind.

5. Rolle (1) nach einem der Ansprüche 1 bis 4, **dadurch gekennzeichnet, dass** jeder Einsatz oder jede Hülse (4) einen Außendurchmesser aufweist, der an den Innendurchmesser des zylindrischen Körpers (2) angepasst und innerhalb des zylindrischen Körpers (2) montiert ist.

6. Rolle (1) nach einem der Ansprüche 1 bis 5, **dadurch gekennzeichnet, dass** der zylindrische Körper (1) aus Glasfasern, Kohlefasern, Aramidfasern, Polyethylenfasern oder Pflanzenfasern besteht.

## Claims

1. A deflection roller (1) for unwinding a reel of a product presented in a strip, the deflection roller comprises a hollow cylindrical body (2) made of composite material comprising at each of its ends a tip (3) intended to be secured with rolling means for rotating said roller (1), ***characterized* in that** the tip is in the form of a sleeve or an insert comprising a alveolar internal structure.

2. Deflection roller (1) according to claim 1, ***characterized* in that** the tips (3) are made of steel.

3. Deflection roller (1) according to claim 1, ***characterized* in that** the tips (3) are made of aluminum.

4. Roller (1) according to claim 1, ***characterized* in that** each insert or sleeve (4) with a alveolar internal structure consists of an outer cylindrical bearing (4a) concentrically positioned around an inner cylindrical bearing (4b), being connected to said inner cylindrical bearing (4b) through a plurality of longitudinal radial ribs (5), acting as spacers, evenly distributed over the circumferences of said inner (4b) and outer (4a) bearing.

5. Roller (1) according to any of claims 1 to 4, ***characterized* in that** each insert or sleeve (4) comprises an outer diameter adjusted to the inner diameter of the cylindrical body (2) and is mounted internally to said cylindrical body (2).

6. Roller (1) according to any one of claims 1 to 5, ***characterized* in that** the cylindrical body (1) is made of glass fibers, carbon fibers, aramid fibers, polyethylene fibers or vegetable fibers.
